# EUROPEAN PATENT SPECIFICATION

(11) **EP 2 017 168 B1**
(45) Date of publication and mention of the grant of the patent: **15.09.2010**
(21) Application number: 08252433.1
(22) Date of filing: 17.07.2008
(51) Int. Cl.: B62K 19/46, B62J 17/02, B62J 17/06

(54) **Straddle type vehicle**
Grätschsitz-Fahrzeug
Véhicule de type monté à califourchon

(30) Priority: 19.07.2007 JP 2007188843; 16.06.2008 JP 2008156757
(43) Date of publication of application: 21.01.2009
(73) Proprietor: Yamaha Hatsudoki Kabushiki Kaisha, Iwata-shi, Shizuoka 438-8501 (JP)
(72) Inventor: Ohzono, Gen c/o Yamaha Hatsudoki Kabushiki Kaisha, Iwata-shi Shizuoka-ken 438-8501 (JP)
(74) Representative: Lamb, Martin John Carstairs

(56) References cited:
- JP-A- 11 152 068
- JP-A- 2000 219 178
- JP-A- 2003 072 627
- US-A1- 2006 021 814

## Description

### FIELD OF THE INVENTION

The present invention relates to a straddle type vehicle.

### BACKGROUND TO THE INVENTION

Certain types of straddle type vehicles have a front cowl in front of a head pipe, and a leg shield in the rear of the head pipe. Such an arrangement is disclosed in, for example, JP-A-2003-63470, JP-A-2007-30590, and JP-A-Hei 8-230738. Also, in the case of JP-A-Hei 8-230738, a storage space (inner rack, pocket) is formed on the rear face of the leg shield (inside of the leg shield).

It should be noted that the name of the body cover around the head pipe varies among the manufacturers or among the inventors. In this specification, a member of the body cover for shielding the front part of the head pipe is referred to as a front cowl, and a member of the body cover for shielding the rear part of the head pipe and for shielding the front part of the rider's legs when the rider is seated on the vehicle in normal driving posture with his or her legs placed on the step floor, is referred to as a leg shield.

When storage spaces are formed on the rear face of the leg shield, the leg shield can be composed of two members so that the side walls in the front and rear of the storage space can be formed with fewer parts. In JP-A-Hei 8-230738, for instance, the leg shield is composed of an upper member located in the upper part and a lower member located in the lower part. The upper member of the leg shield as it is called in this specification is referred to as the "upper inner member" in the relevant patent document, and the lower member of the leg shield as it is called in this specification is referred to as the "lower inner member". It is desirable to reduce weight and at the same time, secure higher rigidity of the vehicle body for improving the running performance of the vehicle. As described above, the same applies to the cases where the leg shield is composed of upper and lower members, and there are some points to be refined in trying to reduce the weight and at the same time to secure higher rigidity of the vehicle.

JP 2000219178 describes a motorcycle having a housing chamber in which an opening on the driver side is provided on the upper and rear part of a leg shield. In this case, the leg shield is formed from a lower half part and an upper half part attached to the upper end of the lower half part. A housing bottom part having an upper releasing opening part is formed on the upper end of the lower half part and a housing recessed part is formed on the half upper part. The upper leg shield parts are attached to the lower leg shield parts by screws. A front cover is attached to the upper half part of the leg shield by screws.

JP 2000219178 discloses a straddle type vehicle according to the preamble of claim 1.

### SUMMARY OF THE INVENTION

According to an aspect of the present invention there is provided a straddle type vehicle comprising:
a head pipe; and
a body cover adapted to cover at least a portion of the head pipe and comprising a front cowl for covering a front portion of the head pipe, and a leg shield for covering a rear portion of the head pipe, said leg shield having an upper member and a lower member,
wherein the front cowl and the upper and lower members of the leg shield overlap each other at an overlapping portion, and are adapted to be secured together at said overlapping portion by a fastener.

The front cowl extends from a front face to opposing sides of the vehicle for covering a forward section of the vehicle. The front cowl is provided with a front cover for covering a front face in the forward section of the vehicle, and right and left side covers which are adapted to be attached to the right and left sides of the front cover for covering the right and left side faces in the forward section of the vehicle.

A headlight is installed on the front cover and winkers or flashers are installed on the side covers.

The fastener may comprise at least one of a screw, and a bolt and a nut.

At least one storage space may be defined between the upper and lower members of the leg shield.

An upper part of the lower member of the leg shield may extend into a rear region of the upper member of the leg shield to form the at least one storage space.

A cutout may be formed on the front cowl. A side wall of the at least one storage space positioned outside in the vehicle width direction may be exposed from the cutout in a side view.

The side face covers of the front cowl, and the upper and lower members of the leg shield may be overlapped with each other in the overlapping portion.

Described herein is a straddle type vehicle having a head pipe for installing the steering shaft, and a body cover for shielding the front and rear parts of the head pipe. Further, the body cover has a front cowl for shielding the front part of the head pipe and a leg shield for shielding the rear part of the head pipe, while the leg shield has an upper member constituting the upper part and a lower member constituting the lower part. The straddle type vehicle has an overlapping portion where the front cowl, the upper member and the lower member are overlapped with each other, and the overlapping portion is tightened up with fasteners.

The straddle type vehicle has an overlapping portion where the front cowl, the upper member and the lower member are overlapped with each other, and the overlapping portion is tightened up with fasteners. The rigidity of the body cover can be improved substantially by the provision of such overlapping portion.

### BRIEF DESCRIPTION OF THE DRAWINGS

These and other aspects of the present invention will now be described, by way of example only, with reference to the accompanying drawings, in which:
FIG. 1 is a left side view of a straddle type vehicle according to an embodiment of the present invention;
FIG. 2 is an exploded perspective view showing the structure of the body cover in the front section of the straddle type vehicle according to an embodiment of the present invention;
FIG. 3 is a left side view of the straddle type vehicle according to an embodiment of the present invention;
FIG. 4 is a front view of the upper member of the leg shield on the straddle type vehicle according to an embodiment of the present invention;
FIG. 5 is a front view of the lower member of the leg shield on the straddle type vehicle according to an embodiment of the present invention;
FIG. 6 is a front view showing the temporarily assembled leg shield of the straddle type vehicle according to an embodiment of the present invention;
FIG. 7 is an exploded perspective view showing the assembling parts structure for the front cowl and the leg shield indicating the straddle type vehicle according to an embodiment of the present invention; and
FIG. 8 is a cross-sectional view showing the tightening structure for the front cowl and the leg shield indicating the straddle type vehicle according to an embodiment of the present invention.

### DETAILED DESCRIPTION OF THE DRAWINGS

a straddle type vehicle according to an embodiment of the present invention will be described below based on the drawings. It should be noted that in the drawings, the members or the portions that give the same effect are denoted with identical reference numerals and symbols. Also, this invention is not limited to the embodiment described below. In addition, the terms "front", "rear", "left", "right," "up", and "down" mean the directions according to the view of a vehicle operator when he is riding on the vehicle in the ordinary seating position. Further, the front is expressed as "Fr", the rear is expressed as "Rr", the left as "L", the right as "R", and the transverse center of the vehicle is expressed as "CL" conveniently and if necessary. In addition, each drawing is assumed to be viewed in the direction that the numerals and symbols are correctly orientated.

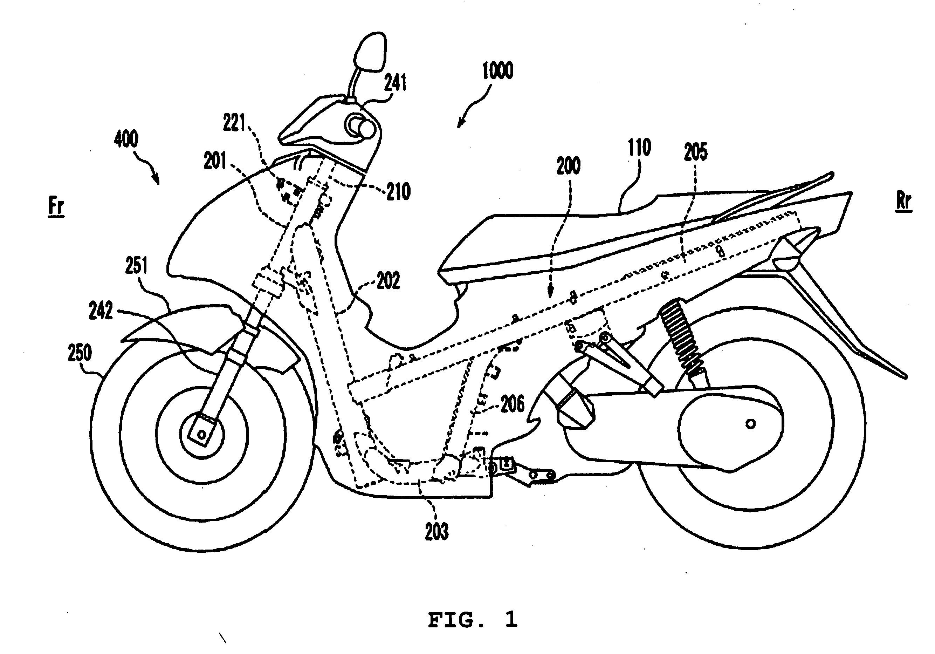

According to this embodiment, a straddle type vehicle 1000 is of a scooter type motorcycle as shown in FIG. 1, on which a body cover 400, made of resin, is attached to a body frame 200.

The body frame 200 according to this embodiment includes a head pipe 201, a main tube 202, a down tube 203, and a seat rail 205, which are welded together. The body frame 200 is provided with a cross member, which is not shown in the drawing, to provide structural rigidity. In addition, the body cover 400, a seat 110 and, although not shown in the drawing, other various members of the straddle type vehicle 1000 including an engine, a radiator and a fuel tank are installed in place on the body frame 200 via the cross member and various kinds of brackets.

According to this embodiment, the head pipe 201 is disposed along the transverse center of the vehicle body (vehicle center) in front of the body frame 200. A steering shaft 210 is inserted through the head pipe 201. As shown in FIG. 1, the steering shaft 210 is provided with a handle 241 in the upper part and a front fork 242 in the lower part. A front wheel 250 is attached to the front fork 242. In this embodiment, a front fender 251 is mounted so as to cover an upper side of the front wheel 250.

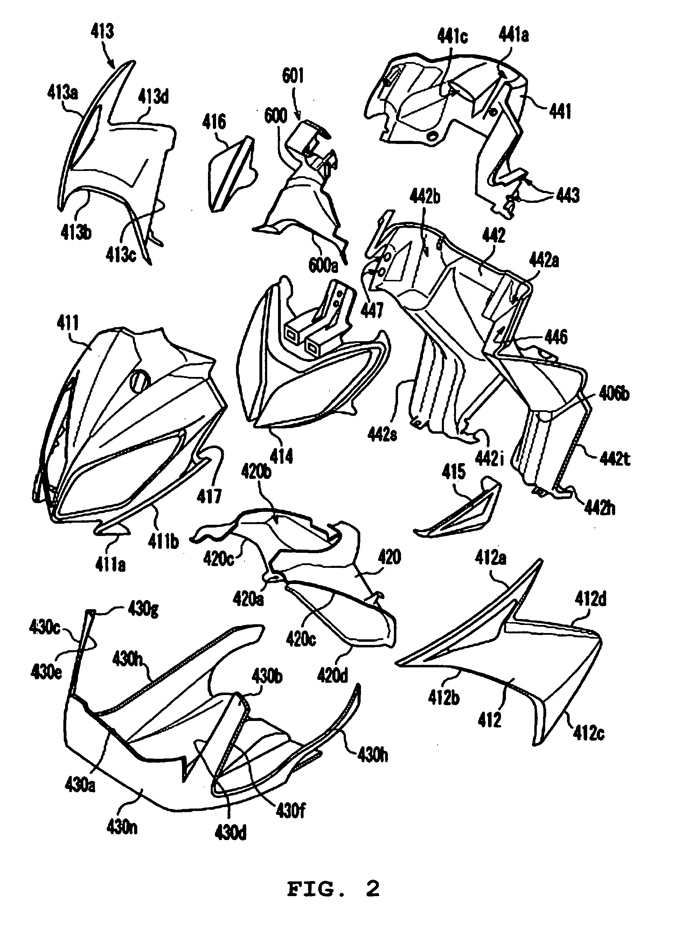

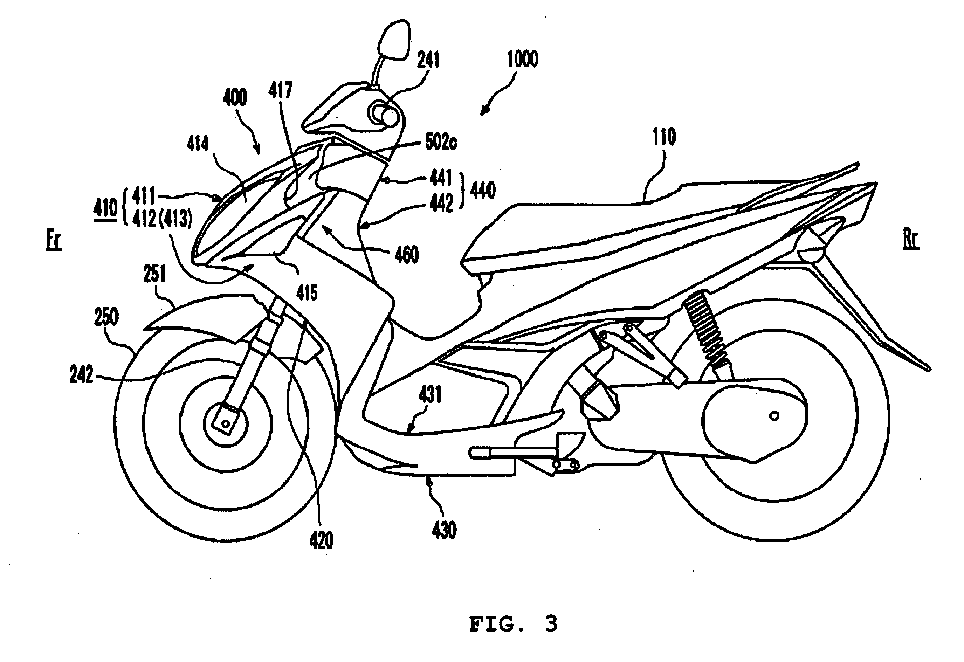

The body cover 400 of the straddle-type vehicle 1000 according to this embodiment will be described. The body cover 400 covers the head pipe 201 in the forward section of the vehicle. As shown in FIGs. 2 and 3, the body cover 400 has a front cowl 410 for shielding the front part of the head pipe 201 and a leg shield 440 for shielding the rear part of the head pipe 201. The leg shield 440 includes an upper member 441 constituting an upper part, and a lower member 442 constituting a lower part. As shown in FIG. 3, the front cowl 410, the upper member 441 and the lower member 442 have an overlapping portion 460 where they are overlapped with each other. The overlapping portion 460 is tightened up with fasteners (not shown in the figure). The straddle type vehicle 1000 can have greatly improved rigidity of the body cover 400 by the provision of such overlapping portion 460.

Specifically according to this embodiment, the body cover 400 includes the front cowl 410, an inner fender 420, an under cover 430 and the leg shield 440 in the front part of the vehicle as shown in FIG. 3. Additionally a mud guard 600 is installed on the inner fender 420 (see FIG. 2). Each member of such a body cover 400 will hereinafter be described in order.

The front cowl 410 is a member for shielding the front part of the head pipe 201. As shown in FIG. 3, the front cowl 410 according to this embodiment is composed of a front cover 411 serving as a front face cover for shielding the front face in the forward section of the vehicle, and side panels 412, 413 serving as a side cover on both sides for shielding the right and left side faces in the forward section of the vehicle, so that it shields the forward section of the vehicle, which is from the front face to both sides of the vehicle.

A head light 414 is installed on the front cover 411 as shown in FIG. 2. Further as shown in FIG. 1, the front cover is positioned to cover the front side of the head pipe 201 of the body frame 200 and is attached to a bracket 221 of the head pipe 201. As shown in FIG. 2, a mounting part for installing the inner fender 420 is formed in the lower front part 411a of the front cover 411. In addition, mounting parts for installing the side panels 412, 413 are formed at the edges on both sides 411b of the front cover 411. Cutouts 417 that cut in from rear end edges of both sides are formed on the front cover 411. The cutouts 417 are positioned to correspond with storage spaces 501, 502, that will be described later. Here, the cutout is not limited to a form that cuts inward from the rear end edge, but may be a form to open in a window-shape.

The side panels 412, 413, constituting part of the front cowl 410, are disposed to shield the right and left sides in the forward section of the vehicle. According to this embodiment, front winkers 415, 416 (flashers) are installed on the side panels 412, 413 as shown in FIG. 2. Upper edges 412a, 413a of the side panels 412, 413 are attached to the edges on both sides 411b of the front cover 411 described above. The inner fender 420 is attached to front lower edges 412b, 413b of the side panels 412, 413. The under cover 430 is attached to rear lower edges 412c, 413c of the side panels 412, 413. The leg shield 440 is attached to rear edges 412d, 413d of the side panels 412, 413.

The inner fender 420, disposed below the front cover 411 as shown in FIG. 3, is a member for preventing the entrance of muddy water to the inner part of the front cover 411 from the under side of the front cover 411. In this embodiment, the inner fender 420 is disposed above the front wheel 250. Therefore, as shown in FIG. 2, an undersurface of the inner fender 420 is concaved upward so as not to interfere with the front wheel 250. In addition, the upper part of the inner fender 420 is open, and the upper part of the front fork 242 supporting the front wheel 250 is disposed rotationally in the opening 420b.

An upper front part 420a of the inner fender 420 is, as shown in FIG. 2, attached to the lower front part 411a of the front cover 411 described above. Edges on both sides 420c of the inner fender 420 are attached to the front lower edges 412b, 413b of the side panels 412, 413 described above. Also, the under cover 430 is attached to a rear lower edge 420d of the inner fender 420. In addition, a lower edge 600a of the mud guard 600 is attached to the periphery of the opening 420b in the upper part of the inner fender 420. According to this embodiment, the upper part 601 of the mud guard 600 is attached to the bracket 221 (see FIG. 1) on the head pipe 201 and also to a key cylinder (not shown in the figure) mounted on the bracket 221.

As shown in FIG. 3, the under cover 430 is a member covering the lower side of the body frame 200 in the front side of the vehicle. According to this embodiment, a front upper edge 430a of the under cover 430, as shown in FIG. 2, is attached to the rear lower edge 420d of the inner fender 420 described above. Also, the under cover 430 has upwardly extended portions 430b, 430c on both sides of the front part. Front edges 430d, 430e of the upwardly extended portion 430b, 430c are attached to the rear lower edges 412c, 413c of the side panels 412, 413. Also, rear edges 430f, 430g of the upwardly extended portions 430b, 430c are attached to the leg shield 440. In addition, a step floor 431 (see FIG. 3) is mounted on an upper edge 430h of the under cover 430.

The leg shield 440 is a member disposed in the rear of the head pipe 201, and is a member for shielding the front part of the rider's legs when the rider (the operator) is in normal driving posture. The leg shield 440 is composed of the upper member 441 and the lower member 442. The handle 241 is mounted on the upper part of the leg shield 440 as shown in FIG. 3.

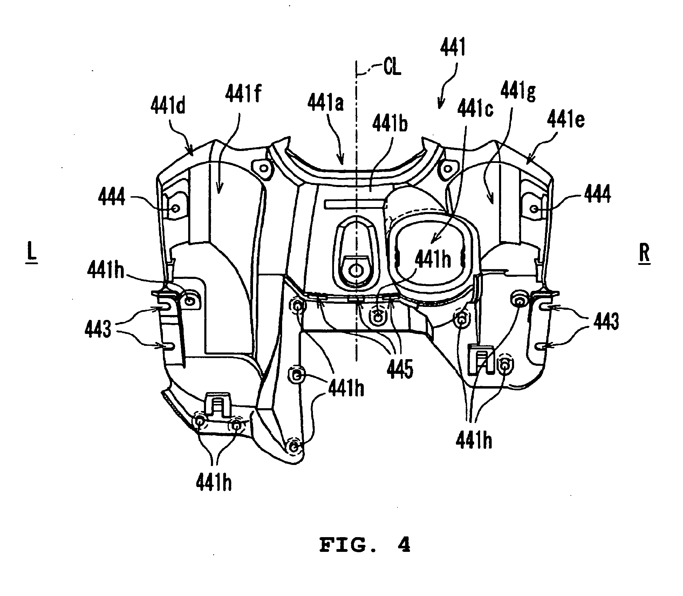

The upper member 441 of the leg shield 440 according to this embodiment is the portion that shields around the rider's knees when the rider puts his legs on the step floor 431. As shown in FIG. 4, a rearwardly concaved recess 441a, through which the steering shaft 210 is to be inserted (see FIG.1), is formed in the central part 441b of the upper member 441. In such a central part 441b, a key insertion opening 441c is formed for installing a key. Also, forwardly concaved recesses 441f, 441g for making a storage space are formed on side areas 441d, 441e of the upper member 441. In addition, multiple assembly holes 441h for assembling the lower member 442 of the leg shield 440 are formed on the upper member 441. Furthermore, the straddle type vehicle 1000 has the overlapping portion 460 (see FIG. 3) where the front cowl 410, and the upper member 441 and the lower member 442 of the leg shield 440 are overlapped with each other. According to this embodiment, a cutout bolt insertion part 443 and a through-hole bolt insertion part 444 through which the bolts are inserted are formed at the edges on both sides of the upper member 441 of the leg shield 440, which correspond with such overlapping portion 460. Also, the upper edge of the lower member 442 is fitted into the central part of the upper member 441 where claw inserting holes 445 are formed.

The lower member 442 of the leg shield 440 according to this embodiment, being disposed below the upper member 441, is the portion that shields around the rider's knees and shins when the rider puts his or her legs on the step floor 431. The central part of the lower member 442 is concaved rearwardly in comparison with both side areas to allow the insertion of the main tube 202 of the body frame 200, while both side areas are extended downward. Upper part side areas 442a, 442b of the lower member 442 are recessed rearwardly in order to form the storage spaces in conjunction with both side areas 441d, 441e of the upper member 441. Both side areas 442c, 442d on the upper edge of the lower member 442 are projected forward. Also, in the lower part of the lower member 442, side areas 442e, 442f are extended downward in comparison with the central part 442g, and mounting parts 442h, 442i for installing the step floor 431 are formed at the lower end of such both end areas 442e, 442f. According to this embodiment, inspection windows 442k are formed at the right side mounting part, through which the inside of the body cover 400 is visible. The portion shown by an arrow 442p in the figure is recessed rearwardly, and this is the receiving portion for the key insertion opening 441c on the upper member 441 (see FIG. 4).

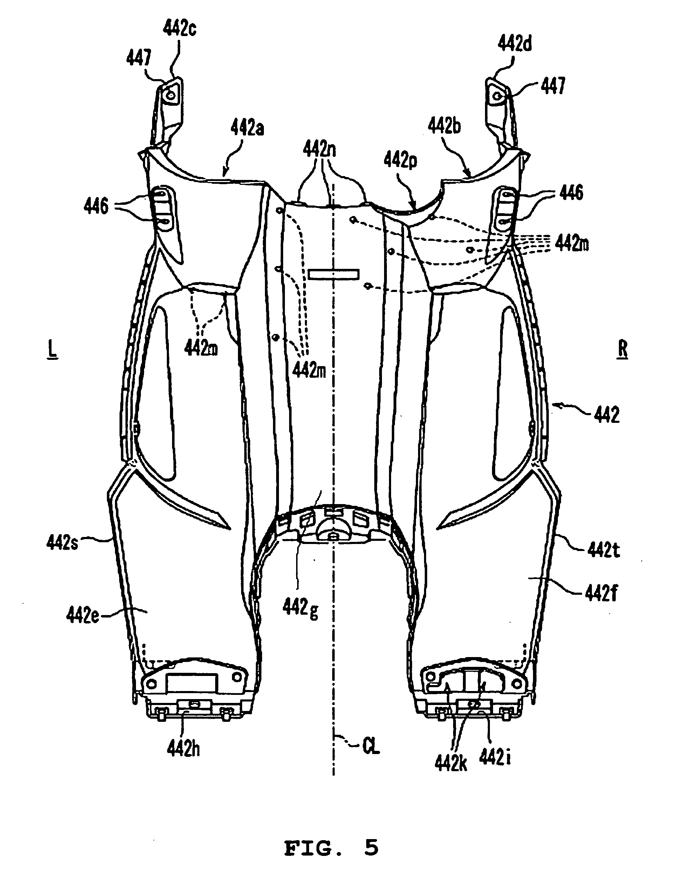

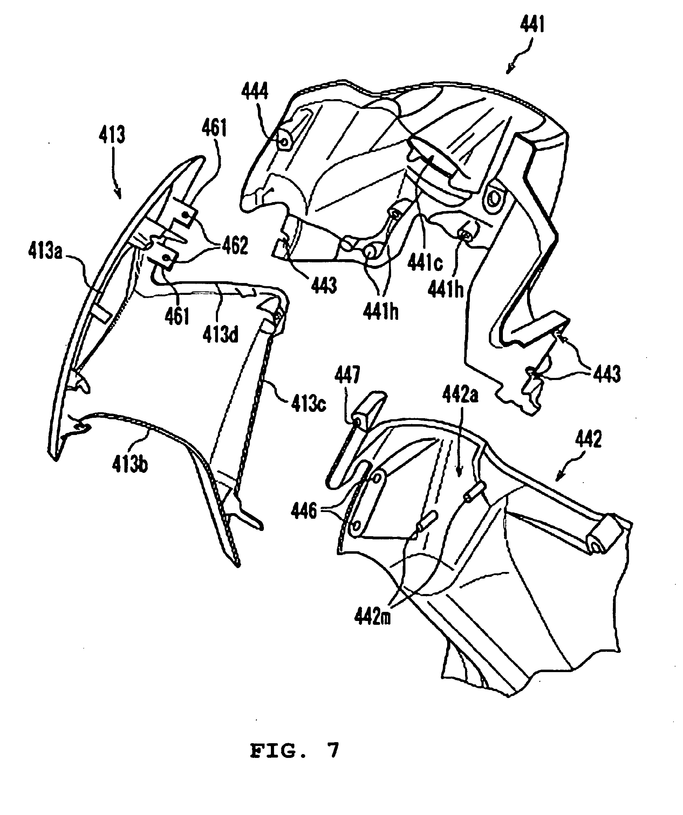

Bosses 442m (see FIG. 7) to be fitted in the assembly holes 441h on the upper member 441 described above, are formed on the front face of the lower member 442 as shown in FIG. 5. Also, claws 442n to be mounted in the claw inserting holes 445 on the upper member 441, are formed in the central part of the upper edge on the lower member 442. On right and left side edges of the upper part side areas 442a, 442b, bolt inserting-through holes 446, 447 are formed for inserting the bolts therethrough so that they correspond with the bolt insertion parts 443, 444 on the upper member 441 of the leg shield 440 described above.

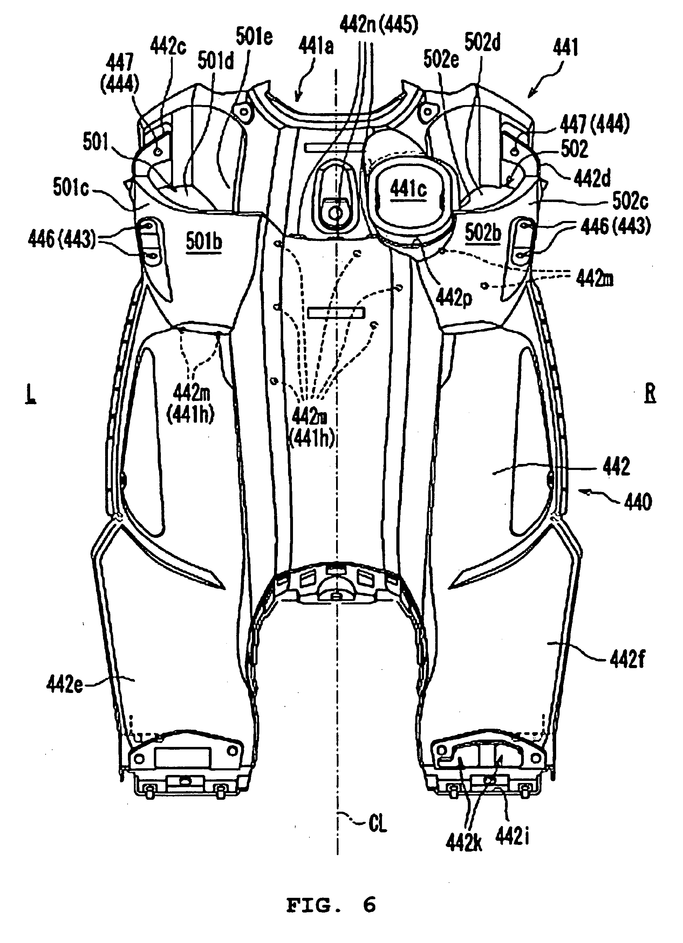

According to this embodiment, the upper member 441 and the lower member 442 are temporarily assembled when the leg shield 440 is assembled to the body frame 200, the front cowl 410 and the under cover 430. According to this embodiment, once the upper member 441 and the lower member 442 of the leg shield 440 are temporarily assembled, the upper part of the lower member 442 extends into the rear of the upper member 441 to form the storage spaces 501, 502 between the upper member 441 and the lower member 442 as shown in FIG. 6. According to this embodiment, the storage spaces 501, 502 are formed on the right and the left sides of leg shield 440, respectively.

As shown in FIG. 6, the storage spaces 501, 502 open upwardly. Side walls 501b, 502b in the rear of the storage spaces 501, 502, and side walls 501c, 502c at their transversely external ends are formed by the lower member 442 of the leg shield 440. On the other hand, side walls 501d, 502d in the front of the storage spaces 501, 502, and side walls 501e, 502e at their transversely internal position are formed by the upper member 441 of the leg shield 440. In this way, according to this embodiment, the upper part of the lower member 442 of the leg shield extends into the rear of the upper member 441 to form the storage spaces 501, 502 between the upper member 441 and the lower member 442, thus, the storage spaces 501, 502 can be formed with fewer parts.

Parts of outer surfaces of the side walls 501c, 502c, that are positioned outside of the storage spaces 501, 502 in the vehicle width direction, are exposed to the outside as viewed laterally from the cutouts 417 of the above-mentioned front cover 411. Capacities of the storage spaces 501, 502 can be increased by protruding the parts of the side walls 501c, 502c through the cutouts 417 to be exposed to the outside of the front cover 411. In the front, rear, left and right side walls that constitute the storage spaces 501, 502, the side walls that are positioned outside in the vehicle width direction and exposed to the outside through the cutouts 417 are not limited to be formed on the lower member 442. They may be formed on the upper member 441.

As shown in FIG. 2, edges on both sides 442s, 442t on the lower member 442 of the leg shield 440 are attached to the rear edges 430f, 430g of the upwardly extended portions 430b, 430c on the under cover 430 described above. In addition, a step floor 431 (see FIG. 3) is attached to the lower ends of both side areas 442e, 442f on the leg shield 440. According to this embodiment, the inside of the body cover 400 is visible through the inspection windows 442k formed at the lower end on the right side of such leg shield as shown in FIG. 6. According to this embodiment, a cooling water tank (not shown in the figure) is disposed inside the inspection windows 442k, and the remaining cooling water level can be checked through such inspection windows 442k. Since the inspection windows 442k are usually hidden behind the floor mat laid on the step floor 431, the remaining cooling water level can be checked by turning up part of the floor mat covering the inspection windows 442k.

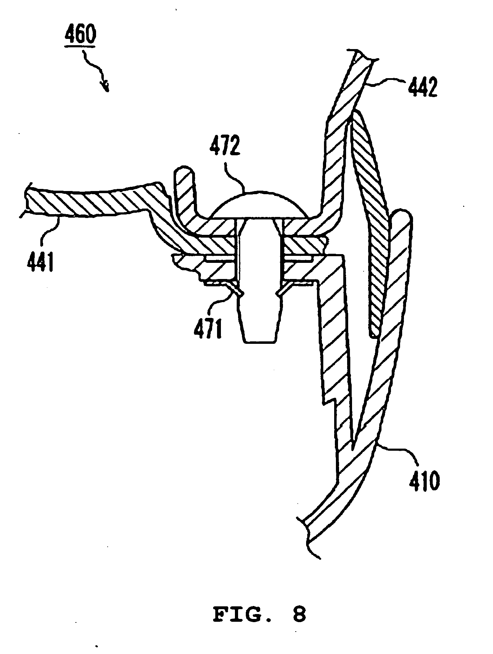

The front cowl 410, and the upper member 441 and the lower member 442 of the leg shield 440 have the overlapping portion 460 where they are overlapped with each other, and the overlapping portion 460 is tightened up with the fasteners (now shown in the figure). Specifically, according to this embodiment, the upper member 441 and the lower member 442 of the leg shield 440 are temporarily assembled as described above, when the front cowl 410 and the leg shield 440 are assembled. Then, at this point, the bolt insertion parts 443, 444 on the upper member 441 are aligned with the bolt inserting-through holes 446, 447 on the lower member 442. In the position corresponding to the bolt insertion parts 443, 444 and the bolt inserting-through holes 446, 447, flanges 461 are provided on the rear edges 412d, 413d of the side panels 412, 413 constituting the front cowl 410, and bolt inserting-through holes 462 are formed on the flange 461. The bolt inserting-through holes 462 on the front cowl 410 are aligned respectively with the bolt insertion parts 443, 444 on the upper member 441 of the leg shield 440 and the bolt inserting-through holes 446, 447 on the lower member 442. According to this embodiment, such overlapping portion 460 (see FIG. 3) is fastened by screws or bolts and nuts used as fasteners. According to this embodiment, for instance, such overlapping portion 460 (see FIG. 3) has a spring nut 471 (also referred to as a speed nut or a bush nut) installed inside of the aligned bolt inserting-through holes (inner surface of the front cowl 410) as shown in FIG. 8. Then, the overlapping portion 460 is tightened up by a screw 472 inserted from the outside and screwed-in to the spring nut inside.

The straddle type vehicle 1000 has the overlapping portion 460 where the front cowl 410, the upper member 441 and the lower member 442 are overlapped with each other, and the overlapping portion 460 is tightened up with the fasteners (not shown). The rigidity of the body cover can be improved substantially by the provision of such overlapping portion. That is, according to this embodiment, the overlapping portion 460 where the front cowl 410, the upper member 441 of the leg shield 440, and the lower member 442 of the leg shield 440 are overlapped with each other, is provided on both of the transversal sides. By overlapping the member constituting the front cowl 410, and the upper member 441 and the lower member 442 of the leg shield 440, the rigidity of the relevant portions can be improved. Also, according to this embodiment, such overlapping portion 460 is overlapped generally along the traveling direction of the vehicle. Thus, the rigidity of the front cowl 410, which is more vulnerable to the wind pressure, can be improved further. This leads to a higher running performance of the vehicle and the improved driveability.

Also, this embodiment has the overlapping portion 460 where the front cowl 410, the upper member 441 and the lower member 442 are overlapped with each other, and the overlapping portion 460 is tightened up with the fasteners (not shown). Thus, not only is the rigidity of the body cover 400 improved, the number of fasteners for tightening up the body cover 400 is reduced, and the process of tightening the fasteners can be further streamlined. An example of such fastener may be a bolt and a nut. A bolt and a nut are handy and capable of improving the rigidity regarding generally the traveling direction of the vehicle because the tightening torque is exerted in the axial direction of the bolt. This leads to a higher running performance of the vehicle and improves driveability. Note that the fastener is not limited to a bolt and a nut. Appropriate fastener may be selected accordingly.

In addition, regarding the leg shield 440 according to this embodiment, the upper part of the lower member 442 extends into the rear of the upper member 441 to form the storage spaces between the upper member 441 and the lower member 442. The storage spaces can be formed with fewer parts when the storage spaces 501, 502 are formed between the upper member 441 and the lower member 442 by extending the upper part of the lower member 442 into the rear of the upper member 441.

Also according to this embodiment, the front cowl 410 extends from the front face to both sides of the vehicle as shown in FIG. 3 for shielding the forward section of the vehicle, and the front cowl 410 is provided with the front cover 411 (front face cover) for shielding the front face of the forward section of the vehicle, and right and left side panels 412, 413 (side face covers) for shielding the right and left side faces of the forward section of the vehicle. Since the front cowl 410 is composed of the combination of the front cover 411 and the right and left side panels 412, 413 as described above, the head light 414 and the winkers 415, 416 can be mounted easily to the front cowl 410. In addition, each member of the front cowl 410 is produced by resin molding according to this embodiment, and when the front cowl 410 is composed of the combination of the front cover 411 and the right and left side panels 412 as is the case for this embodiment, the molding for producing each member can have a simple structure and the front cowl 410 of complex shape can be molded easily.

The description of the straddle-type vehicle according to one embodiment of the present invention has been made so far; however, the straddle-type vehicle according to the present invention is not limited to the above embodiment, and various modifications can be made thereto as defined in the claims.

For example, it merely shows an example of the straddle-type vehicle according to the present invention in terms of the structure of the straddle-type vehicle such as the body frame, body cover, configuration, and structure, and can make various modifications. The same applies to the configuration, structure, and the like of the mudguard.

In the embodiment described above, the front cowl 410 has a structure in which the front cover 411 and the right and left side panels 412, 413 are combined. This is intended to facilitate the installation of the head light 414 and the winkers 415, 416, and also the molding of the front cowl 410 in a complicated form.

The present invention is applicable to various kinds of straddle type vehicle having a front cowl and a leg shield. The straddle type vehicle includes a motorcycle, a motor three-wheeler, a four-wheel buggy, and so on.

### Description of Reference Numerals and Symbol

1000: straddle type vehicle
200: body frame
201: head pipe
400: body cover
410: front cowl
411: front cover
412, 413: side panels
414: head light
415: winker
420: inner fender
430: under cover
430a: front upper edge
431: step floor
440: leg shield
441: upper member
442: lower member
443, 444: bolt insertion part
445: claw inserting holes
446, 447: bolt inserting-through holes
460: overlapping portion
461: flange
462: bolt inserting-through holes
501, 502: storage spaces
600: mud guard

## Claims

1. A straddle type vehicle (1000) comprising:
a head pipe (201); and
a body cover (400) adapted to cover at least a portion of the head pipe (201) and comprising a front cowl (410) for covering a front portion of the head pipe (201), and a leg shield (440) for covering a rear portion of the head pipe (201), said leg shield (440) having an upper member (441) and a lower member (442),
wherein the front cowl (410), and the upper and lower members (441, 442) of the leg shield (440) overlap each other at an overlapping portion (460), and are adapted to be secured together at said overlapping portion (460) by a fastener;
the front cowl (410) extends from a front face to opposing sides of the vehicle (1000) for covering a forward section of the vehicle (1000), and the front cowl (410) is provided with a front cover (411) for covering a front face in the forward section of the vehicle (1000), **characterized in that** the front cover (410) is further provided with right and left side covers (412, 413) which are adapted to be attached to the right and left sides of the front cover (411) for covering the right and left side faces in the forward section of the vehicle (1000); and
a headlight (414) is installed on the front cover (411) and winkers or flashers (415, 416) are installed on the side covers (412, 413).

2. The straddle type vehicle (1000) according to Claim 1, wherein the fastener comprises at least one of a screw, and a bolt and a nut.

3. The straddle type vehicle (1000) according to Claim 1 or 2, wherein at least one storage space (501, 502) is defined between the upper and lower members (441, 442) of the leg shield (440).

4. The straddle type vehicle (1000) according to Claim 3, wherein an upper part of the lower member (442) of the leg shield (440) extends into a rear region of the upper member (441) of the leg shield (440) to form the at least one storage space (501, 502).

5. The straddle type vehicle (1000) according to Claim 4, wherein a cutout (417) is formed on the front cowl (410), and a side wall of the at least one storage space (501, 502) positioned outside in the vehicle width direction is exposed from the cutout (417) in a side view.

6. The straddle type vehicle (1000) according to Claim 1, wherein the side covers (412, 413) of the front cowl (410), and the upper and lower members (441, 442) of the leg shield (440) are overlapped with each other in the overlapping portion (460).

7. The straddle type vehicle (1000) according to any preceding Claim, wherein the head pipe (201) is adapted to receive a steering shaft (210).

## Patentansprüche

1. Grätschsitz-Fahrzeug (1000), das aufweist:
ein Hauptrohr (201); und
eine Karosserieabdeckung (400), die ausgeführt ist, um mindestens einen Abschnitt des Hauptrohres (201) abzudecken, und die ein vorderes Windlaufblech (410) für das Abdecken eines vorderen Abschnittes des Hauptrohres (201) und einen Beinschutz (440) für das Abdecken eines hinteren Abschnittes des Hauptrohres (201) aufweist, wobei der Beinschutz (440) ein oberes Konstruktionsteil (441) und ein unteres Konstruktionsteil (442) aufweist,
wobei sich das vordere Windlaufblech (410) und das obere und das untere Konstruktionsteil (441, 442) des Beinschutzes (440) in einem Überdeckungsabschnitt (460) miteinander überdecken und ausgeführt sind, damit sie mittels eines Befestigungselementes im Überdeckungsabschnitt (460) miteinander gesichert werden;
wobei sich das vordere Windlaufblech (410) von einer Vorderseite zu entgegengesetzten Seiten des Fahrzeuges (1000) für das Abdecken eines vorderen Abschnittes des Fahrzeuges (1000) erstreckt, und wobei das vordere Windlaufblech (410) mit einer vorderen Abdeckung (411) für das Abdecken einer Vorderseite im vorderen Abschnitt des Fahrzeuges (1000) versehen ist,
**dadurch gekennzeichnet, dass** das vordere Windlaufblech (410) außerdem mit einer rechten und einer linken Seitenabdeckung (412, 413) versehen ist, die so ausgebildet sind, dass sie an der rechten und linken Seite der vorderen Abdeckung (411) befestigt werden können, um die rechte und linke Seitenfläche im vorderen Abschnitt des Fahrzeuges (1000) abzudecken; und
wobei ein Scheinwerfer (414) an der vorderen Abdeckung (411) installiert ist und Blinkleuchten oder Blinkgeber (415, 416) an den Seitenabdeckungen (412, 413) installiert sind.

2. Grätschsitz-Fahrzeug (1000) nach Anspruch 1, bei dem das Befestigungselement mindestens eines von einer Schraube und einem Schraubenbolzen und einer Mutter aufweist.

3. Grätschsitz-Fahrzeug (1000) nach Anspruch 1 oder 2, bei dem mindestens ein Stauraum (501, 502) zwischen dem oberen und dem unteren Konstruktionsteil (441, 442) des Beinschutzes (440) definiert wird.

4. Grätschsitz-Fahrzeug (1000) nach Anspruch 3, bei dem sich ein oberer Teil des unteren Konstruktionsteils (442) des Beinschutzes (440) in einen hinteren Bereich des oberen Konstruktionsteils (441) des Beinschutzes (440) erstreckt, um den mindestens einen Stauraum (501, 502) zu bilden.

5. Grätschsitz-Fahrzeug (1000) nach Anspruch 4, bei dem eine Aussparung (417) am vorderen Windlaufblech (410) gebildet wird und eine Seitenwand des mindestens einen Stauraumes (501, 502), die außerhalb in der Breitenrichtung des Fahrzeuges positioniert ist, von der Aussparung (417) aus in einer Seitenansicht freigelegt wird.

6. Grätschsitz-Fahrzeug (1000) nach Anspruch 1, bei dem die Seitenabdeckungen (412, 413) des vorderen Windlaufbleches (410) und das obere und untere Konstruktionsteil (441, 442) des Beinschutzes (440) im Überdeckungsabschnitt (460) miteinander überdeckt werden.

7. Grätschsitz-Fahrzeug (1000) nach einem der vorhergehenden Ansprüche, bei dem das Hauptrohr (201) ausgeführt ist, um eine Lenkwelle (210) aufzunehmen.

## Revendications

1. Véhicule de type monté à califourchon (1000) comprenant :
un tube principal (201); et
un couvercle de carrosserie (400) adapté pour couvrir au moins une partie du tube principal (201) et comprenant un auvent de capot avant (410) destiné un couvrir une partie frontale du tube principal (201), et un protège-jambe (440) destiné à couvrir une partie arrière du tube principal (201), ledit protège-jambe (440) ayant un élément supérieur (441) et un élément inférieur (442),
dans lequel l'auvent de capot avant (410), et les éléments inférieur et supérieur (441, 442) du protège-jambe (440) se chevauchent au niveau d'une partie de chevauchement (460), et sont adaptés pour être fixés ensemble au niveau de ladite partie de chevauchement (460) par un élément de fixation ;
l'auvent de capot avant (410) s'étend d'une face frontale à des côtés opposés du véhicule (1000) afin de couvrir une section en avant du véhicule (1000), et l'auvent de capot avant (410) est pourvu d'un couvercle avant (411) destiné à couvrir une face frontale dans la section avant du véhicule (1000),
**caractérisé en ce que** l'auvent de capot avant (410) est pourvu en outre de couvercles latéraux droit et gauche (412, 413) étant adaptés pour être joints aux côtés droit et gauche du couvercle avant (411) afin de couvrir les faces latérales droite et gauche dans la section avant du véhicule (1000) ; et
un phare (414) est installé sur le couvercle avant (411) et des indicateurs ou des clignotants (415, 416) sont installés sur les couvercles latéraux (412, 413).

2. Véhicule de type monté à califourchon (1000) selon la revendication 1, dans lequel l'élément de fixation comprend au moins un élément parmi une vis, et un boulon ainsi qu'un écrou.

3. Véhicule de type monté à califourchon (1000) selon la revendication 1 ou 2, dans lequel au moins un espace d'entreposage (501, 502) est défini entre les éléments inférieur et supérieur (441, 442) du protège-jambe (440).

4. Véhicule de type monté à califourchon (1000) selon la revendication 3, dans lequel une partie supérieure de l'élément inférieur (442) du protège-jambe (440) s'étend dans une zone arrière de l'élément supérieur (441) du protège-jambe (440) pour former le au moins un espace d'entreposage (501, 502).

5. Véhicule de type monté à califourchon (1000) selon la revendication 4, dans lequel un évidement (417) est formé au niveau de l'auvent de capot avant (410), et une paroi latérale du au moins un espace d'entreposage (501, 502) positionnée à l'extérieur dans le sens de la largeur du véhicule est exposée depuis l'évidement (417) dans une vue latérale.

6. Véhicule de type monté à califourchon (1000) selon la revendication 1, dans lequel les couvercles latéraux (412, 413) de l'auvent de capot avant (410), et les éléments inférieur et supérieur (441, 442) du protège-jambe (440) sont chevauchés les uns sur les autres dans la partie de chevauchement (460).

7. Véhicule de type monté à califourchon (1000) selon l'une quelconque des revendications précédentes, dans lequel le tube principal (201) est adapté afin de recevoir un arbre de direction (210).
